# EUROPÄISCHE PATENTSCHRIFT

(11) **EP 0 952 276 B1**
(45) Veröffentlichungstag und Bekanntmachung des Hinweises auf die Patenterteilung: **13.10.2004**
(21) Anmeldenummer: 99890116.9
(22) Anmeldetag: 07.04.1999
(51) Int. Cl.: E04F 19/04

(54) **Bausatz mit Abdeckleiste und Befestigungsvorrichtung**
Kit with cover moulding and fixing device
Kit avec moulure de couverture et dispositif de fixation

(30) Priorität: 20.04.1998 AT 25798 U
(43) Veröffentlichungstag der Anmeldung: 27.10.1999
(73) Patentinhaber: Neuhofer, Franz, jun., 4893 Zell am Moos (AT)
(72) Erfinder: Neuhofer, Franz, jun., 4893 Zell am Moos (AT)
(74) Vertreter: Hübscher, Helmut, Dipl.-Ing.

(56) Entgegenhaltungen:
- EP-A- 0 566 134
- EP-A- 0 759 490
- DE-U- 8 610 592
- DE-U- 29 500 170
- DE-U- 29 516 458
- DE-U- 29 719 494
- US-A- 5 096 753

## Beschreibung

Die Erfindung bezieht sich auf einen Bausatz mit einer längsgenuteten Abdeckleiste und einer Vorrichtung zum Befestigen dieser Abdeckleiste an einer Wand, wobei die Vorrichtung eine mit der Rückseite an der Wand befestigbare Halteplatte mit zwei vorwärts abstehenden Halteschenkeln zum klemmenden Einstecken in Längsnuten der Abdeckleiste aufweist, die mit ihren Längsrändern einerseits an die Wand und anderseits an eine zur Wand senkrechte Aufsetzfläche anschließt.

Zum klipsartigen Befestigung von mit ihren Längsrändern einerseits an einer Wand und anderseits an einer dazu senkrechten Aufsetzfläche eines Bodens anschließenden Abdeckleisten, wie Sockelleisten oder andere Rand- und Abschlußleisten, ist es bekannt (DE 295 00 170 U1, DE 297 19 494 U1) an der Wand befestigbare Halteplatten vorzusehen, die zwei vorwärts abstehende, in Längsnuten der Abdeckleisten klemmend eingreifende Halteschenkel besitzen, so daß sich eine unsichtbare Befestigungsmöglichkeit ergibt und die Abdeckleisten auch ohne gesonderte Verschraubungen oder Nagelungen montiert und bedarfsweise demontiert werden können. Die Halteplatten mit den abstehenden Halteschenkeln bilden dabei Einzelbeschläge, die mit gegenseitigem Abstand an der tragenden Wandfläche festzuschrauben (DE 295 00 170 U1) oder über einen eigenen Beschlagteil (DE 297 19 494 U1) der Höhe nach verstellbar gehalten sind, was für eine exakte Leistenbefestigung einen ebenen Wandverlauf voraussetzt. Bei Wandkrümmungen oder ähnlichen Wandunebenheiten kommt es zwischen den einzelnen Befestigungsbeschlägen oft zu Spaltenbildungen zwischen Wandfläche und Abdeckleiste und auch zu größeren Spannungen in den Abdeckleisten, die sogar die Leistenhalterung selbst gefährden können. Eine einwandfreie Leistenmontage erfordert daher ein sorgfältiges Setzen der Befestigungsbeschläge mit an die jeweiligen Gegebenheiten der tragenden Wand angepaßten größeren oder kleineren Abständen, was zu einem beträchtlichen Montageaufwand führt.

Um Wände vor einem Anfahren beispielsweise mit Einkaufswagen zu schützen, ist es schließlich bekannt (US 5 096 753 A), an der Wand hohle Schutzprofile zu befestigen. Zu diesem Zweck ist das Hohlprofil zweiteilig ausgebildet und besteht aus einer an der Wand befestigbaren Schiene und einem im Querschnitt U-förmigen Profil, das auf die Befestigungsschiene aufgeklipst werden kann, wobei die beiden Schenkel des U-förmigen Profils zwei hinterschnittene Stege der Befestigungsschiene außen übergreifen, so daß bei einer anfahrbedingten Druckbelastung des U-förmigen Profils dessen Schenkel nach außen fedemd ausweichen und die Stoßbelastung besser aufnehmen können. Voraussetzung ist also ein im Querschnitt U-förmiges Profil, das jedoch bei Abdeckleisten nicht vorhanden ist. Außerdem ist eine Anlage der Längsränder des Hohlprofils an zwei zueinander senkrechten Flächen nicht möglich, wie dies beispielsweise bei Sockelleisten zwingend gefordert werden muß.

Der Erfindung liegt daher die Aufgabe zugrunde, einen Bausatz mit einer längsgenuteten Abdeckleiste und einer Vorrichtung zum Befestigen dieser Abdeckleiste an einer Wand der eingangs geschilderten Art so auszubilden, daß bei verhältnismäßig einfacher Montage eine von der jeweiligen tragenden Wand weitgehend unabhängige, genaue Leistenbefestigung sichergestellt werden kann.

Die Erfindung löst die gestellte Aufgabe dadurch, daß die Halteplatte samt ihren Halteschenkeln zu einer in ihrer Länge an die Länge der Abdeckleiste angeglichenen Halteschiene verlängert ist, deren sich stegförmig über die Länge der Halteschiene erstreckende Halteschenkel quer zur Längsrichtung federnde Klemmteile bilden.

Da die Halteschiene in ihrer Länge an die Länge der zu verlegenden Abdeckleiste angeglichen und als durchgehende Halteschiene an der tragenden Wand befestigt wird, ergibt sich mit den Halteschenkeln eine durchgehende Halterung für die Abdeckleiste, die wie bei den Befestigungsbeschlägen mit ihren an die Halteschenkel angepaßten Längsnuten auf die Halteschenkel klemmend aufgedrückt wird. Der durchgehende Klemmsitz der Abdeckleiste auf der Halteschiene gewährleistet eine sichere und einwandfreie Verbindung der Abdeckleiste mit der Halteschiene und damit einen einwandfreien Leistenverlauf gegenüber einer auch unebenen Wandfläche, an welche Unebenheiten sich die Halteschiene zusammen mit der Abdeckleiste aufgrund ihrer ausreichenden Biegeelastizität gut anschmiegen können. Da es wegen der Montagelänge herstellungs- und verlegebedingte Höhentoleranzen gibt, bilden die Halteschenkel quer zur Längsrichtung federnde Klemmteile, die aufgrund ihrer Federelastizität diese Höhentoleranzen ausgleichen und dennoch zur erforderlichen Klemmverbindung zwischen Halteschenkel und Abdeckleiste führen. Die Halteschiene kann je nach Einsatzzweck ähnlich wie die bekannten Befestigungsbeschläge unterschiedlichen Querschnitt besitzen, sie kann zur leichteren Montage einen vorwärts abgewinkelten Fußflansch zum bodenseitigen Aufsetzen aufweisen, sie kann zum Einsatz im Innenkantenbereich einen geeigneten, an die Innenkantenverhältnisse angepaßten abgewinkelten Querschnitt bilden u. dgl..

Weisen die Halteschenkel keilförmig an einen Stegteil angeformte, vorzugsweise gegeneinander höhenversetzte Klemmlippen auf, entstehen Klemmteile, die einen verhältnismäßig großen Toleranzbereich überbrücken können und eine ausreichend stabile Halterung der Abdeckleisten gewährleisten.

Eine andere Möglichkeit, geeignete Klemmteile vorzusehen, ergibt sich dadurch, daß die Halteschenkel beidseitig eine Längsrippung und einsteckseitig einen Längsschlitz aufweisen, so daß durch die geschlitzten Halteschenkel die erforderliche Federwirkung auftritt und zusammen mit der Längsrippung eine verhältnismäßig feste Klemmverbindung innerhalb des Toleranzbereiches zu erreichen ist.

In der Zeichnung ist der Erfindungsgegenstand beispielsweise veranschaulicht, und zwar zeigen
- Fig. 1: eine mittels einer Vorrichtung befestigte Abdeckleiste im Querschnitt,
- Fig. 2: die Halteschiene dieser Vorrichtung im Schaubild und die
- Fig. 3 und 4: zwei abgeänderte Ausführungsbeispiele einer Halteschiene des erfindungsgemäßen Bausatzes ebenfalls im Schaubild.

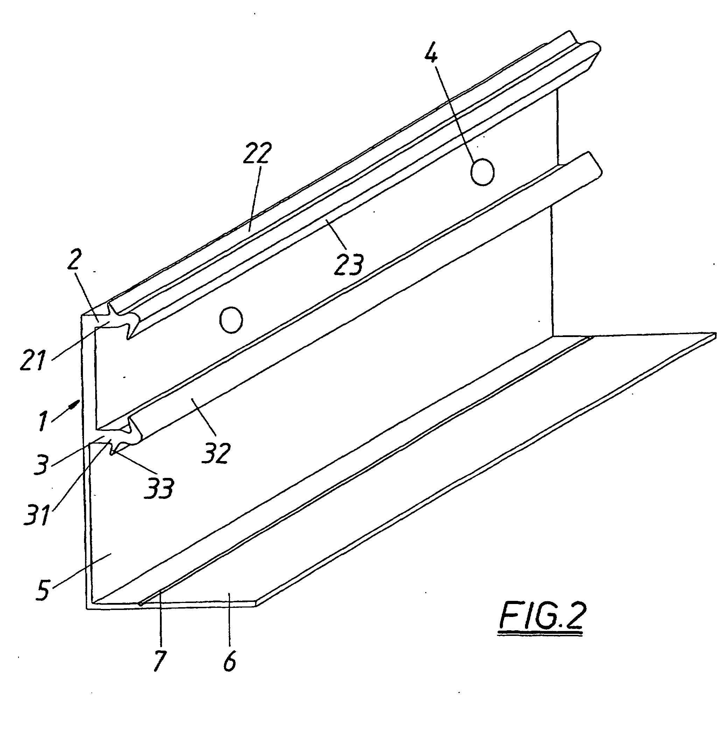

Zum Befestigen einer längsgenuteten Abdeckleiste gibt es eine Halteschiene 1 mit zwei voneinander beabstandeten, vorwärts abstehenden Halteschenkeln 2, 3, die stegförmig über die Halteschienenlänge durchgehend verlaufen und quer zur Längsrichtung federnde Klemmteile bilden, wobei gemäß dem Ausführungsbeispiel nach Fig. 2 als Klemmteile an einem Stegteil 21, 31 angeformte, gegeneinander höhenversetzte Klemmlippen 22, 23, 32, 33 dienen. Zwischen den Haltesthenkeln 2, 3 sind in der Halteschiene 1 Befestigungslöcher 4 vorgesehen und als Montagehilfe ist die Halteschiene 1 bodenseitig durch einen vorwärts abgewinkelten Fußflansch 5 mit einem Stützschenkel 6 verbreitert, welcher Stützschenkel 6 vorzugsweise durch eine Sollbruchstelle 7 in seiner Abmessung an die jeweiligen Montageverhältnisse angepaßt werden kann.

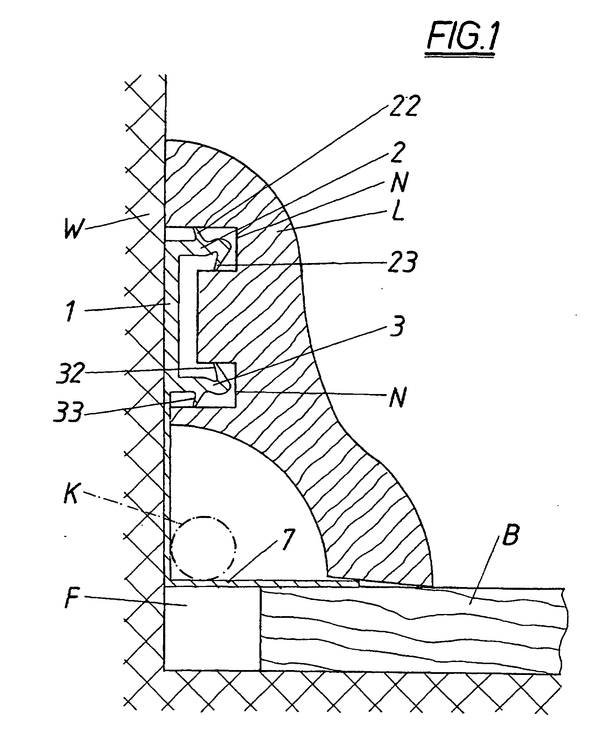

Wie in Fig. 1 veranschaulicht, wird die Halteschiene 1 mit der Rückseite an einer Wand W befestigt, wozu die Halteschiene 1 mit ihrem Fußflansch 5 als Anschlag auf dem Boden B abgestützt wird und dann an den Stellen der Befestigungslöcher 4 Schraubenlöcher in die Wand W gebohrt werden. Nach dem Festschrauben der Halteschiene 1 liegt der Fußflansch 5 mit seinem Stützschenkel 6 am Boden B auf und überbrückt dabei eine eventuell vorhandene Dehnungsfuge F zwischen Wand W und Boden B, so daß einerseits die Fuge F den ordnungsgemäßen Sitz der Befestigungsschiene unbeeinträchtigt läßt und anderseits der die Fuge F überbrückende Fußflansch als Träger eines der Wand W entlang verlegten Kabels K einsetzbar ist. Auf die Befestigungsschiene läßt sich nun klipsartig eine Abdeckleiste L aufklemmen, die dazu an die Halteschenkel 2, 3 und deren Klemmteile angepaßte Längsnuten N aufweist. Die Federeigenschaften der Klemmteile quer zur Längsrichtung der Halteschiene ermöglichen dabei einen Ausgleich der herstellungs- bzw. verlegebedingten Höhentoleranzen zwischen Abdeckleiste L und Halteschiene 1.

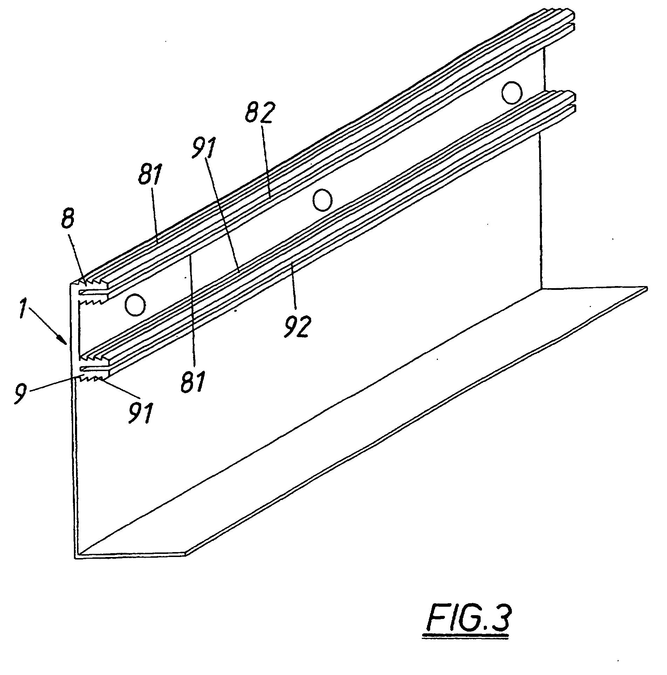

Gemäß dem Ausführungsbeispiel nach Fig. 3 weist die Halteschiene 1 zwei Halteschenkel 8, 9 auf, die selbst als federnde Klemmteile wirken und dazu beidseitig eine Längsrippung 81, 91 aufweisen sowie einsteckseitig mit einem Längsschlitz 82, 92 versehen sind.

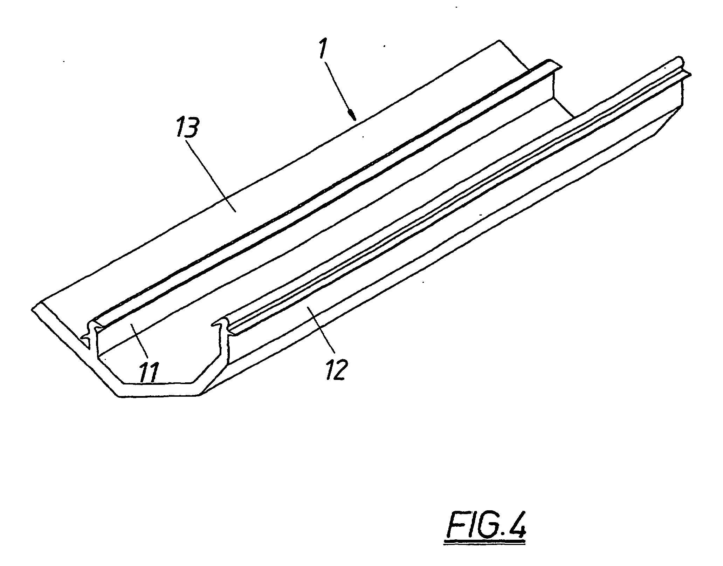

Wie in Fig. 4 angedeutet, kann die Halteschiene 1 auch einen im wesentlichen C-förmigen Querschnitt 10 besitzen, wodurch eine Montage entlang einer Innenkante möglich ist. Hier sind die Randschenkel des Querschnittes als Halteschenkel 11, 12 ausgebildet, wobei zusätzlich zur Randfugenüberbrückung od. dgl. ein zur Rückseite der Schiene um 45° schräggeneigter Stützschenkel 13 angeformt sein kann.

## Patentansprüche

1. Bausatz mit einer längsgenuteten Abdeckleiste (L) und einer Vorrichtung zum Befestigen dieser Abdeckleiste (L) an einer Wand (W), wobei die Vorrichtung eine mit der Rückseite an der Wand (W) befestigbare Halteplatte mit zwei vorwärts abstehenden Halteschenkeln (2, 3; 8, 9; 11, 12) zum klemmenden Einstecken in Längsnuten (N) der Abdeckleiste (L) aufweist, die in der Gebrauchstellung mit ihren Längsrändern einerseits an die Wand (W) und anderseits an eine zur Wand (W) senkrechte Aufsetzfläche (B) anschließt, **dadurch gekennzeichnet, daß** die Halteplatte samt ihren Halteschenkeln (2, 3; 8, 9; 11, 12) zu einer in ihrer Länge an die Länge der Abdeckleiste (L) angeglichenen Halteschiene (1) verlängert ist, deren sich stegförmig über die Länge der Halteschiene (1) erstreckende Halteschenkel (2, 3; 8, 9; 11, 12) quer zur Längsrichtung federnde Klemmteile bilden.

2. Bausatz nach Anspruch 1, **dadurch gekennzeichnet, daß** die Halteschenkel (2, 3) keilförmig an einen Stegteil (21, 31) angeformte Klemmlippen (22, 23; 32, 33) aufweisen.

3. Bausatz nach Anspruch 2, **dadurch gekennzeichnet, daß** die Klemmlippen (22, 23; 32, 33) gegeneinander der Höhe nach versetzt sind.

4. Bausatz nach Anspruch 1, **dadurch gekennzeichnet, daß** die Halteschenkel (8, 9) beidseitig eine Längsrippung (81, 91) und einsteckseitig einen Längsschlitz (82, 92) aufweisen.

## Claims

1. A kit with a longitudinally grooved cover moulding (L) and a device for fixing said cover moulding (L) on a wall (W), the device comprising a retaining plate which is adapted to be fixed by the back to the wall (W) and which has two forwardly projecting retaining limbs (2, 3; 8, 9; 11, 12) for clamping insertion in longitudinal grooves (N) of the cover moulding (L), which in the position of use by its longitudinal edges on the one hand adjoins the wall (W) and on the other hand a support surface (B) perpendicular to the wall (W), **characterised in that** the retaining plate together with its retaining limbs (2, 3; 8, 9; 11, 12) is lengthened to form a retaining rail (1), the length of which is adapted to the length of the cover moulding (L) and the retaining limbs (2, 3; 8, 9; 11, 12) of which extending web-fashion over the length of the retaining rail (1) form clamping parts resilient transversely of the longitudinal direction.

2. A kit according to claim 1, **characterised in that** the retaining limbs (2, 3) have clamping lips (22, 23; 32, 33) formed wedge-fashion on a web part (21, 31).

3. A kit according to claim 2, **characterised in that** the clamping lips (22, 23; 32, 33) are offset from one another vertically.

4. A kit according to claim 1, **characterised in that** the retaining limbs (8, 9) have a longitudinal ribbing (81, 91) on both sides and a longitudinal slot (82, 92) on the insertion side.

## Revendications

1. Kit avec une moulure de couverture (L) et un dispositif pour fixer cette moulure de couverture (L) sur une paroi ou mur (W), le dispositif présentant une plaque de maintien, susceptible d'être fixée par la face arrière sur le mur ou paroi (W,) et deux branches de maintien (2, 3; 8, 9; 11, 12) en saillie vers l'avant, pour l'enfichage avec effet de serrage dans des rainures longitudinales (N) de la moulure de couverture (L), qui, en position d'utilisation, par ses bords longitudinaux se raccorde, d'une part, au mur ou paroi (W) et, d'autre part, à une face de pose (B) perpendiculaire au mur ou paroi (W), **caractérisé en ce que** la plaque de maintien avec ses branches de maintien (2, 3; 8, 9; 11, 12) est prolongée pour former une glissière de maintien (1) à longueur rendue égale à la longueur de la moulure de couverture (L), glissière de maintien dont les branches de maintien (2, 3; 8, 9; 11, 12), s'étendant en forme de nervures sur la longueur de la glissière de maintien (1), forment des parties de serrage à effet élastique en direction transversale à la direction longitudinale.

2. Kit selon la revendication 1, **caractérisé en ce que** les branches de maintien (2, 3) présentent des lèvres de serrage (22, 23; 32, 33) en forme de coin, formées d'un seul tenant sur une partie de nervure (21, 31).

3. Kit selon la revendication 2, **caractérisé en ce que** les lèvres de serrage (22, 23; 32, 33) sont mutuellement décalées en hauteur.

4. Kit selon la revendication 1, **caractérisé en ce que** les branches de maintien (8, 9) présentent de part et d'autre un nervurage longitudinal (81, 91) et, du coté enfichage, une fente longitudinale (82, 92).
